# EUROPEAN PATENT APPLICATION

(11) **EP 3 091 407 A1**
(43) Date of publication of application: **09.11.2016**
(21) Application number: 15305683.3
(22) Date of filing: 05.05.2015
(51) Int. Cl.: G05B 19/409, H02B 15/04, H04B 10/80

(54) **MOSAIC MODULE FOR A CONTROL PANEL OF A POWER PLANT, CONTROL PANEL, AND SYSTEM COMPRISING A CONTROL PANEL AND A POWER GENERATING UNIT**

(71) Applicant: AREVA NP, 92400 Courbevoie (FR)
(72) Inventor: Klein, Andreas, 91056 Erlangen (DE)
(74) Representative: Lavoix

(57) **Abstract**

The present invention concerns a mosaic module (100) for a control panel of a power plant, the control panel comprising a plurality of mosaic modules (100) being arranged adjacent to each other, each mosaic module being adapted to be fixed to a mechanical support structure, the mosaic module (100) comprising:
- at least one display device (110) for displaying a function of the power plant and/or an input device (112);
- at least one optical power supply input (122) for receiving a power supply for the mosaic module (100) via one or more first optical links (320), and
- at least one optical data input (102) for receiving data to be displayed on the display device (110) and/or at least one optical data output to transmit an input command received from the input device.

## Description

The present invention concerns a mosaic module for a control panel of a power plant.

Further, this invention relates to a control panel, the control panel comprising at least one mosaic module and a mechanical support structure.

Additionally, this invention relates to a system comprising a control panel and a power generating unit providing power to the control panel via an optical link connection. Such a system is also called a control division.

EP 1 607 812 B1 discloses a safety control apparatus. The apparatus comprises optical data inputs and outputs.

Existing standard mosaic modules for a control panel have electric power connections and electric data connections. The mosaic modules comprise conventional switches, buttons, LED lamps and analog indicators which are connected galvanically to the redundant divisions of instrumentation and control systems. The mosaic modules serve for indication of life process information and for the control of the process.

For safety reasons it is in general necessary to have redundant division of safety instrumentation and control systems in a power plant. Therefore, the systems, and implicitly the control panels and mosaic modules of different divisions are interconnected.

During severe internal events, like fire, flooding, air plane crash, etc., the control panels of the power plants may be exposed to system foreign over-voltages, for example much higher than 24 Volts, which may cause destruction of the control panel of the power plant. Further, if the overvoltage is coupled to the system of one division, the overvoltage may be spread to other divisions via the control panels of the control room. In this case, the instrumentation and control systems of other, redundant control divisions may also be destroyed. Further, such conventional mosaic modules need a complicated planning of overvoltage barriers.

Further, a great number of dedicated mosaic modules for each type of indication or control element are required in a power plant. This leads to a broad variety of different types of mosaic modules, which have to be stored as spare parts and which have to be deliverable for long period. Therefore, maintenance costs for conventional mosaic modules for control panels of a power plant are relatively high.

Accordingly, it is an object of the present invention to overcome the drawbacks of the prior art and to provide a mosaic module for control panel of a power plant that is more reliable and allows to reduce the maintenance costs.

This object is achieved with the mosaic module for control panel for power plants, the control panel comprising a plurality of mosaic modules being arranged adjacent to each other, each mosaic module being adapted to be fixed to a mechanical support structure, the mosaic module comprising:
- at least one display device for displaying a function of the power plant and/or an input device;
- at least one optical power supply input for receiving a power supply for the mosaic module via one or more first optical links, and
- at least one optical data input for receiving data to be displayed on the display device and/or at least one optical data output to transmit an input command received from the input device.

According to embodiments, the mosaic module for a control panel comprises one or more of the following features, taken in all technical possible combinations:
- the mosaic module comprises at least one optical power supply monitoring output for sending an optical monitoring signal via a second optical link, wherein, in particular, the optical monitoring signal depends on the received optical power via the at least one optical power supply input;
- the monitoring signal represents a predefined portion of the received optical power, in particular between 0,2 and 3 percent of the received optical power;
- further comprising an optical splitter, the optical splitter being adapted to split off a predefined portion of the received optical power as the optical monitoring signal;
- at least one of the input devices is a tactile command surface, for example a touch surface, and/or wherein the at least one of the display devices is a display screen, wherein, in particular at least one input device and at least one display device are combined in a touch screen;
- comprising a controller, in particular a FPGA, adapted to drive the display device in dependence of data received via the optical data input, and/or adapted to sense at least one input command received via the input device and to send a signal via the optical data output in dependence of the at least one sensed input command;
- the mosaic module comprises at least one conversion device, in particular a photo-electric device, for transforming at least a fraction of the received optical power received by the at least one optical power supply input into electrical power for powering the at least one display device and/or the at least one input device;
- the at least one optical data input receives data via one or more third optical links, being different to the one or more first optical links;
- at least one first submodule A including the display device, the input device, the at least one optical data input, and/or the at least one optical data output, and a second submodule B, comprising the at least one optical power supply input, the at least one optical power supply monitoring output, the optical splitter and/or the conversion device, wherein the at least one first submodule A is respectively provided in a first housing and the second submodule B is provided in a second housing being different from the at least one first housing, wherein the first housing and the second housing are adapted to be fixed respectively to the mechanical support structure;
- the mechanical support structure provides a basic grid structure for the mosaic modules, each grid element being rectangular shaped, in particular square shaped, and having a grid element length GL and a grid element width GW, wherein mosaic module comprises a display surface including the display device, the display surface having a length and a width corresponding respectively to the grid element length GL or a multiple of the grid element length and a grid element width GW or a multiple of the grid element width, wherein in particular the grid element width and/or the grid element length GL is between 15 and 50mm, in particular between 20 and 40mm.

According to a further aspect, a control panel is provided, the control panel for a power plant comprising
- a mechanical support structure, and
- a plurality of mosaic modules placed adjacent to each other, wherein the at least one of these mosaic modules is provided according to an embodiment disclosed herein.

According to embodiments, the control panel comprises one or more of the following features, taken in all technical possible combinations:
- the mechanical support structure comprises for each mosaic module a frame structure, the frame structure is adapted to the outer shape of the display surface of the respective mosaic module;
- each frame structure is formed by a plurality of junction elements provided at least the corners of the frame structure, and a plurality of elongated interconnection elements being provide between the junction elements along the width or the length of the mosaic module.

According to another aspect, a system is provided, the system comprising:
a control panel according to an embodiment disclosed herein,
a power generating unit for generating an optical power output, in particular via a laser power source, and
the first optical link connecting the power generating unit with one of the optical power supply inputs of a mosaic module.

According to an embodiment, the system comprises one or more of the following features, taken in all technical possible combination:
the first, second and third optical links are optical fiber cables..

By providing a mosaic module according to the invention, it becomes possible to guarantee high security levels and independence of different control panels of the power plants, even if over-voltages may occur in the system. In particular, the electrical isolation between redundant divisions is provided by the optical connection. The optical power supply of the mosaic module and the optical data input and data output of the mosaic module allows electrical insulation. The optical power supply output of the mosaic module allows high security levels even during severe internal events or human errors. Further, the usage of an optical power supply input and at least one optical data input reduces the effort for planning and implementing of measures for protection against system foreign overvoltages, in particular within the mosaic module.

The individual arrangement of the mosaic module position in the control panel allows using the same type of control panel for different surveillance applications in the power plants. It is for example possible to represent static symbolic flow diagram elements and dynamic symbolic flow diagram elements in two different mosaic modules of identical structure.

The invention will now be described in detail with reference to the drawings, wherein:
- figure 1 is a schematic view of a portion of a system for controlling a power plant according to the invention;
- figure 2 is a schematic view of the optical power reception device of figure 1;
- figure 3 shows a back view of the system of figure 1;
- figure 4 is a front view of the control panel of figure 1;
- figure 5 is a side view of the control panel of figure 1;
- figure 6 shows an embodiment of the mechanical support structure; and
- figure 7 shows another embodiment of the mechanical support structure.

Typically, a power plant, for example a nuclear power plant, comprises a plurality of redundant divisions of instrumentation and control systems. For example the power plant comprises a plurality of instrumentation rooms, a main control room, an auxiliary control room etc. Each of the divisions may comprise one or more control panels, for example a main control panel and a remote control panel. Further, the power plant may comprise local control panels.

The control panels and the divisions are typically interconnected. Further, each instrumentation room may comprise one or more hardware drivers connected to one or more actuators and/or one or more hardware receivers being connected to one or more sensors. The one or more hardware drivers and/or the one or more hardware receivers are also connected to one or more control panels to provide information to the one or more control panels and/or to receive instructions from the one or more control panels. Further, the instrumentation room comprises one or more powering units for powering one or more mosaic modules of the one or more control panels.

According to an embodiment, the one or more hardware drivers and/or receivers are connected to one or more control panels.

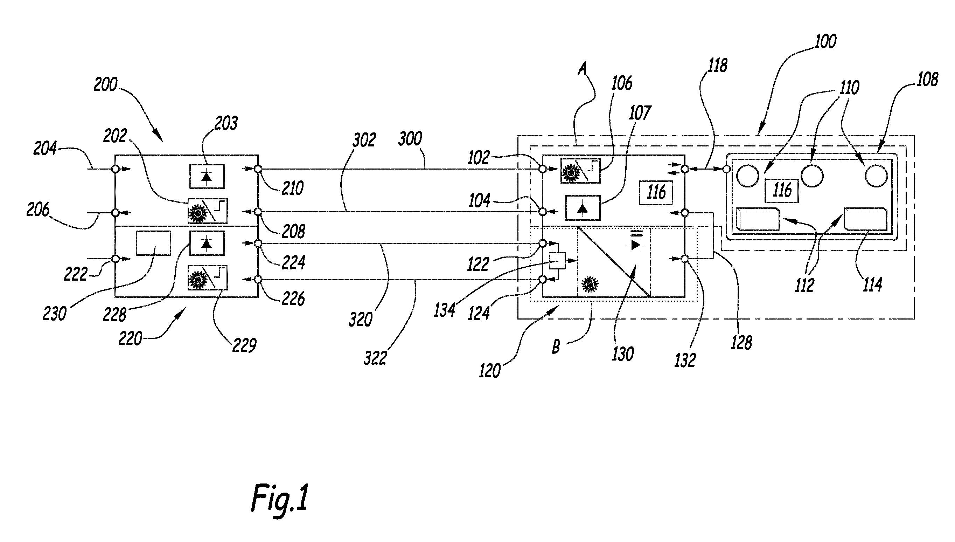

With reference to figure 1, there is shown a mosaic module or desktile 100 of a control panel of the power plant, a mosaic module controlling device 200 and a power generating unit 220. The mosaic module 100 and the mosaic module controlling device 200 are optically connected via at least one optical data link 300, 302 for exchanging optical data signals.

According to an embodiment, the mosaic module 100 serves for indication of life process information and for the control of the process. They typically show a graphical representation of the system or process to be monitored and/or graphical representations of the indication and control elements or other functions. For example, a majority of mosaic modules, especially for safety instrumentation and control, indicates buttons, switches, lamps, analog instrument displays or other functions of the power plant.

Symbols of the graphical representation may be static or dynamic. For example, the symbols may represent different states of the system or process or its components, for instance, the fill level of a tank, a flow through a filtration unit, a pump, a valve, buttons, switches, lamps, analog instrument displays and other indication and control elements.

The mosaic module 100 comprises at least one optical data input 102 and at least one optical data output 104 for receiving optical data signals from the mosaic module controlling device 200 via the optical data link 300, and for sending optical data signals to the mosaic module controlling device 200 via the optical data link 302.

The mosaic module 100 further comprises at least one photo electric conversion device 106 configured for transforming an optical data signal received by the optical data input 102 into an electrical signal. Further, the mosaic module 100 includes an electric optical conversion device 107, for example a laser diode, for transforming an electrical signal into an optical data signal to be sent by the optical data output 104.

According to an embodiment, the mosaic module 100 comprises a human-machine interface 108. The human-machine interface 108 comprises a display device 110. For example, the display device 110 may comprise one or more LEDs or one or more a LCDs.

In an embodiment, the display device is a graphical display, which may display a variety of static or dynamic two- or three dimensional symbols, for example as described here-above. The symbols can represent, for example, an activated button and/or a not activated button. In an embodiment, the display device is adapted to display the state of the power plant. According to an example, the display device 110 is an electrophoretic display, like for e-papers. The display device 110 may comprise a surface area showing many different static or dynamic symbols. The display device 110 allows therefore simplifying conventional display devices and to avoid a broad variety of different types of display devices. A graphical representation of the process or system to be monitored on a display may be accordingly adapted to the process or system to be monitored.

The human-machine interface 108 also comprises an input device 112 allowing a person to control the power plant to input data. The input signals of the input device 112 are converted to digital signals.

According to an embodiment, the input device 112 may be a tactile command surface.

For example, the display device 110 and the input device 112 may be combined in a touch screen. This allows an operator easy and comfortable command of the power plant.

In an embodiment, which may be combined other embodiments disclosed herein, the human-machine interface 108 may comprise a frame 114 surrounding the display device 110 and/or the input device 112, wherein the frame is illuminated. For example, the frame may be illuminated in different colors and modes. The modes may be for example: completely lighted, partially lighted, not lighted and/or flashing, in particular at 0.5 Hz, 2 Hz and 8 Hz. The colors may be for example: yellow, white, green, red and blue. Each combination of colors and modes may be associated to a different meaning and may attract the attention to a specific display device 110 and/or input device 112. According to an embodiment, the illuminated frame 114 is intended to compensate small view angles and low luminosity of a graphic display.

Further, the mosaic module 100 may comprise one or more controllers 116, for example FPGAs (field programmable gate arrays). According to an embodiment, the controllers are provided to control the mosaic module 100, in particular the display device 110, the input device 112 and/or the illuminated frame 114. For example, the one or more controllers 116 may be configured to display one or more particular symbols of the power plant on the display device 110. For example, at least one controller 116 might be associated with the human-machine interface 108. According to an embodiment at least one controller 116 might be associated with the photo electric conversion device 106 and/or the electric optical conversion device 107.

The at least one controller 116 is adapted to drive the display device 110 in dependence of data received via the optical data input 102, and/or adapted to sense at least one input command received via the input device 112 and to send a signal via the optical data output 104 in dependence of the at least one sensed input command.

Thus, it is possible to maintain the necessary variety of functionality for the mosaic modules 100 by individually loading configurations into the one or more controllers 116. This may significantly reduce the effort for planning and implementing control panels. Changes of functionality, appearance, labeling etc. of the mosaic modules 100 or desktiles may be easily made during any project stage, for example during engineering-, manufacturing-, commissioning- and exploitation-operation of the power plant.

According to an embodiment, the mosaic module, in particular the at least one controller 116 is adapted to store temporarily all data input which is input by the operator via the touch screen interface. In a further embodiment, all data received from the mosaic module controlling device 200 and shown on the mosaic module 100 can be stored in the control panel. The stored data and the control panel can be downloaded or extracted by the operator. For example a non-volatile memory might be used for that purpose. The non-volatile memory might be a cyclic buffer or ring buffer, which is overwritten after a specific period of time. For example, the period might be between 1 and 10 weeks, in particular between three weeks and seven weeks.

According to further examples, also additional information, like a time stamp in order to restore the chronological order of the stored data and a checksum for the data sample and/or the status and failure information of down- and upstream components are stored to ensure the integrity of the stored data.

Thus, according to these embodiments, signals of the process or system to be monitored and/or operator inputs are logged. This may serve as a backup for the data logging of computerized process visualization systems.

According to an optional embodiment, the human-machine interface 108 is connected to the photo electric conversion device 106 and/or the electric optical conversion device 107 via at least one internal electrical connection 118.

The mosaic module 100, in particular the human machine interface 108, for example the display device 110 and/or the input device 112 may have a width and a height of or adapted to or multiples of the grid of a mechanical support structure as it will be explained further below.

The mosaic module 100 comprises an optical power reception device 120 with at least one optical power supply input 122 for receiving an optical power via one or more optical power links 320, and one optical power supply monitoring output 124 for sending an optical monitoring signal. The optical power reception device 120 has also an electrical power output 132 for supplying electrical power to the other parts of the mosaic module 100, for example the photo electric conversion device 106, the at least one controller 116 and/or the human-machine interface 108 via an electrical connection 128.

The optical power reception device 120 also comprises a conversion device 130, which is a photo-electric device configured for transforming optical power into electrical power. At least a fraction, in particular the main fraction, of the optical power received by the optical power supply input 122 is transformed by the photo-electric device 130 into electrical power. This electrical power is output on the electrical power output 132 and provides electrical power to the remaining part of the mosaic module 100 via the electrical connection 128.

For example, the optical monitoring signal may be generated by an optical splitter 134, which splits off a predefined portion of the received optical power. For example, the optical splitter 134 splits off between 0,2 and 3 percent of the received optical power. The split off portion is used as monitoring signal and provided to the optical power supply monitoring output 124.

In other embodiments, the monitoring signal may be generated in a different way, for example by measuring the light intensity received by the optical power reception device, transforming the measured light intensity into an optical signal and providing this optical signal to the optical power supply monitoring output 124.

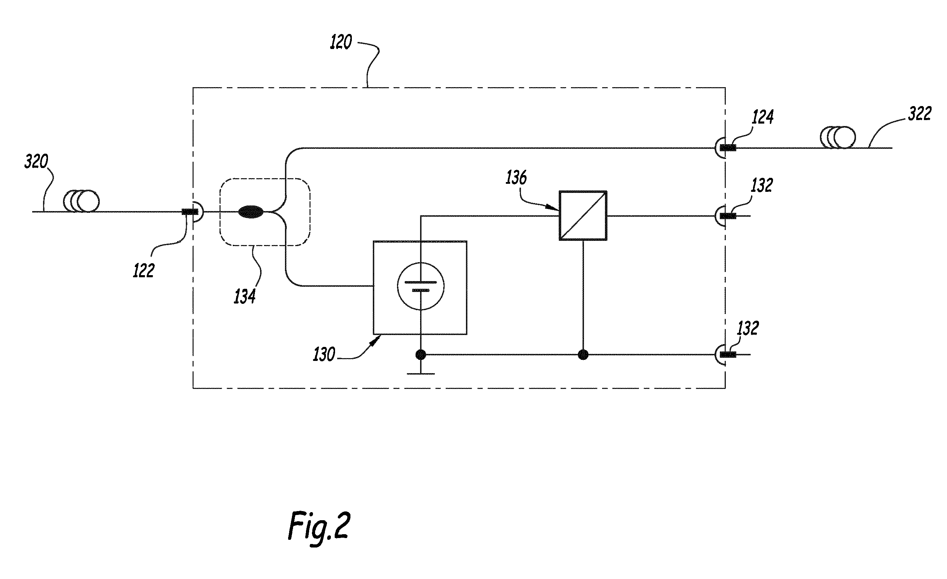

Figure 2 shows in more detail an embodiment, which may be combined with other embodiments disclosed herein, of the optical power reception device 120. The optical power reception device 120 comprises the splitter 134 allowing splitting up the received optical power signal of optical power supply input 122 into two signals. The first signal split up by the splitter 134 contains a majority of the optical energy received by the optical power reception device 120 and is led to the photo-electric device or optical electrical converter 130, for example a photovoltaic cell. The photo-electric device 130 transforms the optical energy into electric energy which is output on the electrical power output 132.

The optical power reception device 120 may also comprise an output voltage regulation device 136 configured for regulating a tension applied on the electrical power output 132. The output voltage regulation device 136 is connected in parallel to the photo-electric device 130. In an embodiment, the photo-electric device 130 receives at least 85%, in particular more than 95%, and for example 99% of the optical power received on the optical power supply input 122.

In this case, the remaining fraction of the optical power which is not transformed by the photo-electric device 130 is led to the optical power supply monitoring output 124 of the optical power reception device 120. In an embodiment, the remaining fraction of the optical energy is about 1% of the optical energy received on the optical power supply input 122. This fraction of optical power is output on the optical power supply monitoring output 124 is in this embodiment the optical monitoring signal.

The optical monitoring signal is sent back to the power generating unit 220 via an optical power monitoring link 322 being different to the optical power link 320 which is connected to the optical power supply input 122.

The mosaic module 100 comprises, according to an embodiment, a first submodule A and a second submodule B. The first submodule A includes the human machine interface 108, for example the display device 110 and/or the input device 112, the photo electric conversion device 106, electric optical conversion device 107, the at least one controller 116, the at least one optical data input 102 and/or the at least one optical data output 104.

The first submodule A is provided in a first housing adapted to be fixed to a mechanical support structure 400.

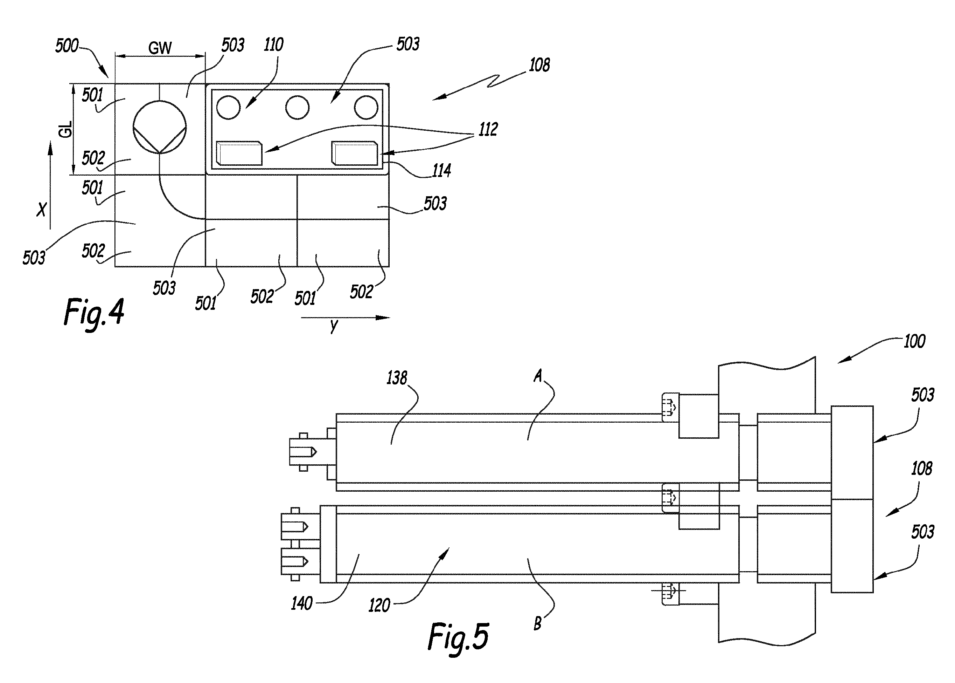

The second submodule B may comprise the optical power reception device 120, in particular the at least one optical power supply input 122, the at least one optical power supply monitoring output 124, the optical splitter 134 and/or the conversion device 130. The second submodule B is provided in a second housing being different from the first housing 138, wherein the second housing 140 is also adapted to be fixed to the mechanical support structure 400, in particular adjacent to the first submodule A. The first housing 138 and the second housing 140 are shown in Figure 5. According to an embodiment, the first housing and the second housing are fixed to the mechanical support structure and, in particular, the first housing 138 being arranged adjacent to the second housing 140.

The mosaic module controlling device 200 is electrically connected to or is part of the one or more hardware drivers and/or the one or more hardware receivers. In other words, the mosaic module controlling device 200 is in an example provided remotely from the mosaic module in the instrumentation room. The mosaic module 100 and the mosaic module controlling device 200 are arranged in different rooms of the power plant. The mosaic module controlling device 200 comprises at least one electrical data signal input 204 for the reception of analog or digital electrical control signals of the power plant, for example sensor signals, which are intended to be output on an mosaic module 100, and at least one electrical signal output 206 for sending of electrical control signals for controlling the power plant, for example for an actuator. According to an embodiment, the mosaic module controlling device 200 is adapted to cyclically acquire input control signals and to cyclically update output control signals.

The mosaic module controlling device 200 comprises at least one optical data signal input 208 for the reception of optical control signals from the mosaic module 100, and at least one optical data signal output 210 for sending of optical data signals to the mosaic module 100.

The mosaic module controlling device 200 comprises a photo-electric conversion device 202 configured for converting electrical signals into optical data signals, for example a serial stream of data. Further, the mosaic module controlling device 200 includes an electric optical conversion device 203, for example a laser diode, for converting optical data signals into electrical data signals. Thus, the electric optical conversion device 203 is adapted to transform the electrical data signal of the electrical data signal input 204 into an optical data signal which is output on the optical data signal output 210. This data can then be send via the optical data link 300 to the mosaic module 100, for example as a serial bit stream.

Likewise, the mosaic module controlling device 200 is adapted to receive optical data from the mosaic module 100 via the optical data link 302, for example as a serial bit stream, on the optical data signal input 208 which is transformed into an electrical signal by the photo-electric device 202 and then output on the electrical signal output 206 in order to provide the information or commands to the instrumentation and control systems of the power plant.

The optical data links 300, 302 allow exchanging optical data signals between the mosaic module 100 and the mosaic module controlling device 200, for example at data rates from several 10kBd up to more than 1MBd. The optical data links 300, 302 are capable to exchange optical data signals over, for example a distance from 10m up to more than 1 km. Typical distances are between 50m and 150m. The optical data signals are generated by the mosaic module controlling device 200 with a laser having a adequate wavelength to minimize attenuation by optical data links. In an embodiment, the wavelength of the laser is between 800 nm and 1500 nm, for example 850nm or 1310nm.

According to a further embodiment, this arrangement enables it to easily provide the input data of one mosaic module to a plurality of mosaic module controlling devices 200. For example a splitter may integrated into the optical data link 302, to provide the data to more than one instrumentation rooms, for example of different divisions. According to an embodiment, the optical splitters may be mounted on the mechanical support structure of the control panel at grid positions which are either unused or used for the graphical representation of the system/process to be monitored.

According to another embodiment, the mosaic module controlling device 200 is adapted to provide digitized timing information to the mosaic modules 100 via the optical data link 300. For example, the timing information is derived from a binary signal acquired and processed by the mosaic module controlling module 200. For example, the timing signal may comprise a clock signal. The mosaic module 100 uses for example the timing information for providing a time stamp for timestamping of data samples stored in the nonvolatile memory of the mosaic module 100, as described here-above.

According to an embodiment, which may be combined with other embodiments disclosed herein, the timing information, in particular the clock signal, is derived by the module controlling module 200 from the binary signal, for example a rising edge of the binary signal and/or the pulse width of subsequent binary signals. Thus, a direct network connection to a central clock or time server is avoided. In an embodiment, an intermediate device is required to encode the time information of the central clock / time server. The intermediate device may serve as an isolation device, for example as defined by IEEE 384 /IEC 60709.

The power supply for the mosaic module 100 is explained in the following. The power generating unit 220 has an electrical input 222 connected to an electrical power supply, as well as an optical power supply output 224 and an optical monitoring signal input 226.

The power generating unit 220 comprises a power conversion device or electrical optical converter 228 for converting an electric power signal available on the electrical input 222 into an optical power signal. According to an embodiment, the power conversion device 228 is a power laser, for example a diode laser having a nominal wavelength having an adequate wave length to minimize attenuation by optical data links. Minimum attenuation of optical fiber, for example multimode fiber, is achieved for example with a wavelength between 800nm and 1500 nm, for example with a wavelength of 850 nm or 1310 nm. The laser is for example a Class 4 laser according to the specification according to IEC 60825-1. The efficiency of the electrical to optical converter is for example 40%, and the efficiency of the optical to electrical power converter is for example 33%.

The optical power signal is output on the optical output 224 and transmitted to the mosaic module 100 via at least one optical power link 320. For example, the optical power link may be an optical fiber. In an embodiment, the optical power is between 5W and 15W, in particular between 7 and 12, for example about 10W.

Further, the power generating unit 220 comprises a photo electric device 229 for measuring the provided input at the optical monitoring signal input 226. The power generating unit 220 includes a controller 230 which controls the power conversion device 228. According to an embodiment, the optical monitoring signal received at the optical input 226 is analyzed by the controller 230. The controller 230 is configured for controlling the power conversion device 228, detecting the emission of an optical power signal on the optical output 224, and/or detecting the reception of an optical monitoring signal on the optical input 226.

For example, if the optical power monitoring signal is not received, for example due to a cable cut or if the cable is not connected to an power reception device, the power generating unit is adapted to stop the operation of the power conversion device 228. In other words, in case the controller 230 does detect emission of an optical monitoring signal on the optical output 224, but does not detect reception of an optical monitoring signal on the optical input 226, the controller 230 commands the power generating unit 220 in order to stop emission of an optical power signal on the optical output 224. This allows detecting for example a broken optical power link 320 in order to avoid accidents.

According to an embodiment, the power of the received optical power monitoring signal is measured and compared to the power output by the power conversion device 228. Thus, the protection mechanism ensures that the laser beam is always encapsulated. Therefore, the optical monitoring signal allows controlling the optical power output of the power conversion device 220 and increases the security of the power plant.

One advantage of the optical power link 320 is the inherent isolation of the optical fibers. This means that the mosaic module 100 and the power generating unit 220 are completely decoupled, even if system foreign over-voltages appear, for example higher than 400kV. This provides a lot higher protection to power plant systems than conventional protection systems which protect only up to 690V.

According to an embodiment, due to the fixed assignment of the mosaic module controlling device to a mosaic module 100 with a human-machine-interface 108 as well as the power supply via the power generating unit 220 and the optical power reception device 120 a single failure of these components lead only to the unavailability of one mosaic module 100 or desktile.

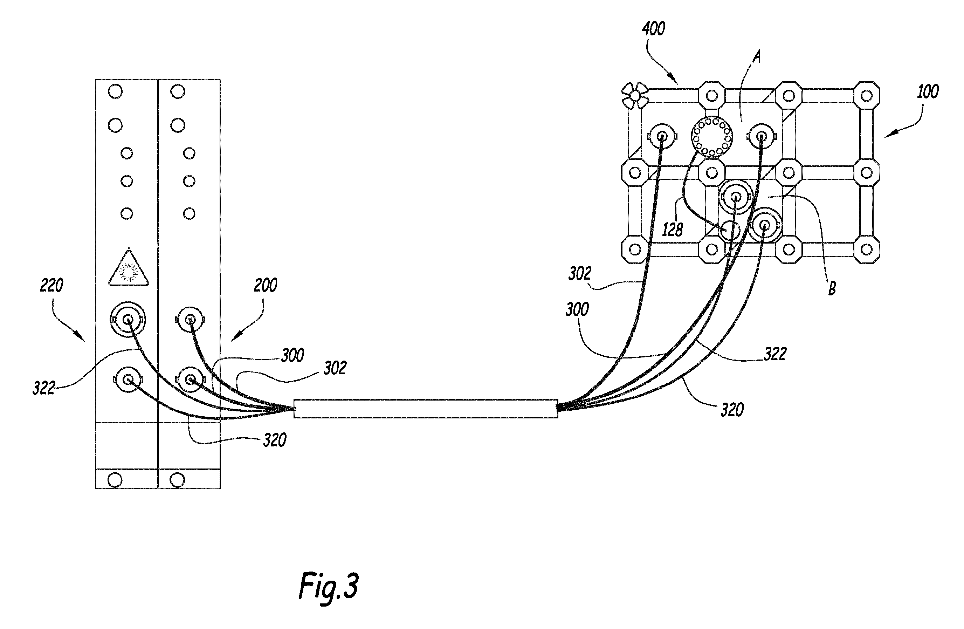

Figure 3 shows a schematically a back view of a system according to an embodiment, comprising a the mosaic module 100 mounted on a mechanical support structure 400, a mosaic module controlling device 200 and a power generating unit 220, which are connected with the optical data links 300, 302 and the optical power link 320 and the optical power monitoring link 322. It should be noted that only for illustrative purposes the mosaic module controlling device 200 and the power generating unit 220 are shown on the same drawing as the mechanical support structure and the mosaic module 100. Further, in Figure 3 the two housings of the first submodule A and the second submodule B are shown in a back view.

According to an embodiment, the optical link(s) are optical fiber cables. The optical fiber cables can be of the type called loose tube cables or of the type breakout cables. In the case of loose tube cables, they have to apply a fan-out cable for direct connector mounting. Optical fiber cables of the optical data link 300, 302 can be for example a multimode fiber cable with adequate core / cladding diameter. For example, core / cladding diameter of 60 /125 µm, 50 /125 µm or 105 /125 µm. Further, optical fiber cables may be grouped together.

According to a further embodiment, the system may comprise instead of separate optical data and power links 300, 320 a combined optical data and power links. In such a case, the data is provided to the power generating unit to modulate it onto the optical power link 320. In the same manner, the monitoring signal may be used to transmit the data acquired form the mosaic module 100 to the mosaic module controlling device 200.

A system for controlling the power plant can be formed by multiple mosaic modules 100 linked by optical links 300, 302, 320, 322 to their corresponding mosaic module controlling devices 200 and power generating units 220.

According to an embodiment, a control panel can be formed by arranging a plurality of mosaic modules 100 adjacent to each other, wherein each mosaic module 100 is adapted to be fixed to the mechanical support structure 400. The arrangement of the mosaic modules 100 can be individually adapted, which allows a higher degree of customization.

Figure 4 shows a front view of a portion of a control panel 500 being provided on the mechanical support structure 400 and Figure 5 shows a side view thereof. The control panel 500 is shown with an (active) mosaic module 100 according to an embodiment disclosed herein, wherein the human-machine interface 108 is directed to the operator of the control panel 500. Further, the control panel 500 includes passive mosaic modules 501 being provided only with a static graphical symbol directed to the operator. The mosaic modules 100, 501 are arranged adjacent to each other to graphically represent together a process or a system to be monitored.

The control panel 500 and the mechanical support structure 400 have a basic grid structure, wherein each grid element 502 has a grid element length GL in a first direction X and a grid element width GW in a second direction Y being orthogonal to the first direction. According to an embodiment each grid element 502 being rectangular shaped, in particular square shaped. However, in other embodiments, also other shapes may be used, for example hexagonal or triangular shaped grid elements.

According to an embodiment, the grid element width GW and/or the grid element length GL is between 15 and 50 mm, in particular between 20 and 40 mm, for example 18 mm, 24 mm, 36 mm or 48 mm.

Figure 4 shows five mosaic modules 100, 501. However, the control panel may include another number of mosaic modules.

Each mosaic module 100, 501 comprises a display surface 503 provided to be directed to the operator. The display surface 503 of the mosaic module 100 includes the display device 110 of the human machine interface 108. According to an embodiment, substantially the complete surface of the display surface 503 of the mosaic module is occupied by the human machine interface 108, in particular the display device 110.

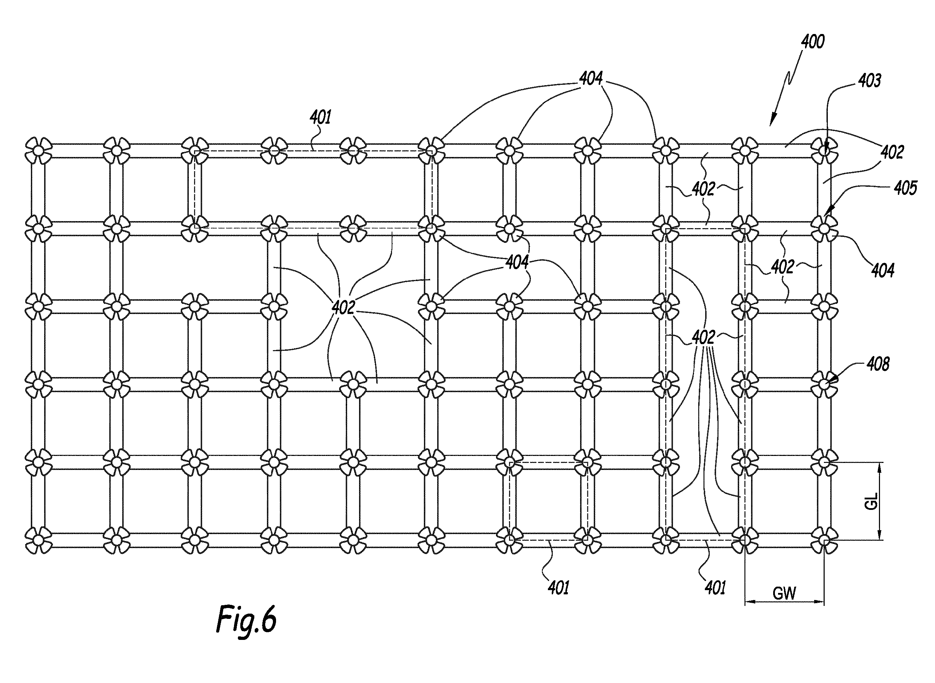

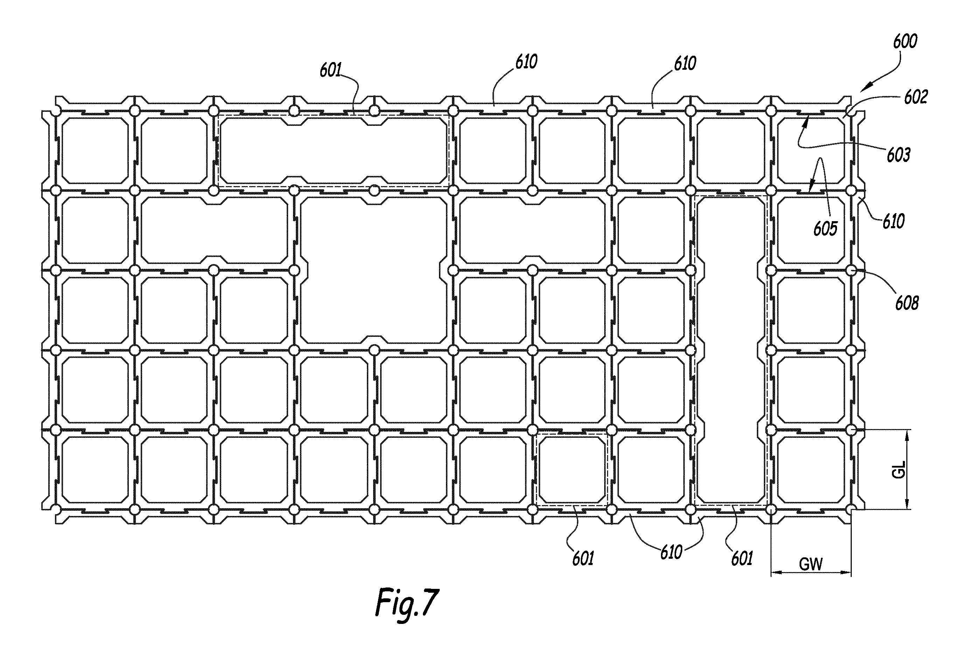

The display surface 503 is rectangular and has a length in the first direction X and a width in the second direction Y corresponding respectively to a grid element length GL or a multiple of the grid element length GL and a grid element width GW or a multiple of the grid element width. For example the display surface 503 of the mosaic module 100 has a width of two grid element widths GW and a length of one grid element length GL. The other mosaic modules 501 have a width of one grid element width GW and a length of one grid element length GL. As it will be apparent from Figures 6 and 7 also other sizes may be used.

The mechanical support structure 400 is shown in more detail in Figures 6 and 7.

Figure 6 shows an embodiment of the mechanical support structure 400 comprising for each mosaic module 100, 501 a frame structure 401, the frame structure 401 being adapted to the outer shape of the display surface 503 of the respective mosaic module 100, 501. In figure 6 only three frame structures 401 are shown as an example. However, as it is apparent, the mechanical support structure 400 includes much more frame structures. Each frame structure surrounds a contiguous empty space for a mosaic module to be placed therein. The mechanical support structure 400 comprises elongated interconnection elements 402 having at least one interconnection finger 403 at both opposite ends. The mechanical support structure 400 also comprises a junction element 404 having at least four interconnection openings 405. In other embodiments also another number of interconnections might be used, for example in case hexagonal mosaic elements are used. The interconnection openings 405 cooperate with the interconnection fingers 403 of the interconnection element 402 to form a rigid connection. The rigid connection might be formed by a tongue and groove connection, in particular by a dovetail connection.

The interconnection elements 402 have all the same size or lengths in an embodiment. The length of the interconnection elements 402 corresponds substantially to the grid element lengths GL and/or to the grid element width GW.

The interconnection elements 402 and the junction elements 404 are adapted to be assembled together to form the mechanical support structure 400. In other embodiments it is also possible to form polygons having rectangular angles between the interconnection elements 402.

These different shapes of the frame structure 501 of the mechanical support structure 400 allow to individually adapt the mechanical support structure 400 to an individual arrangement of mosaic modules 100, 501. Each frame structure 501 is formed by a plurality of junction elements 404 provided at least at the corners of the frame structure 501, and a plurality of elongated interconnection elements 402 being provided respectively between the junction elements 404.

According to an embodiment, a plurality of junction elements 404, in particular each junction element 404, includes a central fixation opening 408, in which a fixation element, for example a screw, can be introduced. The fixation element allows holding of the mosaic module 100, 501 to the mechanical support structure 400 by the fixation element fixed in the fixation opening 408. Also other means for fixing the mosaic modules 100, 501 to the mechanical support structure may be used.

Alternatively, as shown on figure 7, a second mechanical support structure 600 can be used in order to support the mosaic modules 100, 501. The mechanical support structure 600 comprising for each mosaic module 100, 501 a frame structure 601, the frame structure 601 being adapted to the outer shape of the display surface 503 of the respective mosaic module 100, 501. In figure 7 only two frame structures 601 are shown as an example. However, as it is apparent, the mechanical support structure 600 includes much more frame structures. Each frame structure surrounds a contiguous empty space for a mosaic module 100, 501 to be placed therein.

The second mechanical support structure 600 is assembled from a plurality frame elements 602 having a substantially rectangular shape having four sides. In other embodiments, the frame element may have also other shapes, for example in case the mosaic modules have a display surface being hexagonal. Each frame element 602 is adapted to a respective frame structure 601, i.e. it has a size substantially corresponding to the display surface 503 a mosaic module 100, 501 to be placed therein. In other words, the frame elements surround a contiguous empty space for a mosaic module 100, 501 to be placed therein.

According to an embodiment, a frame element 602 comprises at least one interconnection cavity 603 arranged on at least one side of the frame element 602 and at least one interconnection protrusion 605 arranged on at least one side of the frame element 602. For example, the interconnection cavities are arranged on two adjacent sides of the frame element 602, and the interconnection protrusions 605 are arranged on the two other adjacent sides of the frame element 602.

The number and the distance between adjacent interconnection cavities 603 on each side are adapted to the grid size. For example, for every grid element width or length one interconnection cavity 603 or interconnection protrusion 605 is provided, in particular in the middle thereof.

The interconnection protrusion 605 allows interconnection with the interconnection cavity 603 of a second frame element 602. The interconnection protrusion 605 and the interconnection cavity 603 form a tongue and groove connection, for example a dovetail connection.

The frame element 602 comprises at each corner a cut-out forming together a circular opening 608 with other cut-outs of other frame elements 602. The cut-out has a shape of a quadrant. The opening 608 is configured for cooperation with a fixation element, for example a screw.

In an embodiment, the second mechanical support structure 600 comprises also border elements 610 having on a first side at least one interconnection cavity 603 or at least one interconnection protrusion 604, configured to cooperate with at least one interconnection cavity 603 or at least one interconnection protrusion 604 of at least one frame element 602. The border element 604 comprises a plurality of cut-outs configured to cooperate with the cut-outs of the frame elements 602 or another border element 604 to form together a circular opening for a fixation element. The border element is provided to form a smooth other border of the control panel.

A control panel for a power plant can be formed by the mechanical support structure 400 or 600 on which is mounted a plurality of mosaic modules 100, 501 which are adjacent to each other.

The position and the shape of the mosaic modules can be individually adapted.

## Claims

1. Mosaic module for a control panel of a power plant, the control panel comprising a plurality of mosaic modules (100) being arranged adjacent to each other, each mosaic module being adapted to be fixed to a mechanical support structure (400, 600), the mosaic module (100) comprising:
- at least one display device (110) for displaying a function of the power plant and/or an input device (112);
- at least one optical power supply input (122) for receiving a power supply for the mosaic module (100) via one or more first optical links (320), and
- at least one optical data input (102) for receiving data to be displayed on the display device (110) and/or at least one optical data output to transmit an input command received from the input device.

2. Mosaic module according to claim 1, wherein the mosaic module (100) comprises at least one optical power supply monitoring output (124) for sending an optical monitoring signal via a second optical link (322), wherein, in particular, the optical monitoring signal depends on the received optical power via the at least one optical power supply input (122).

3. Mosaic module according to claim 2, wherein the monitoring signal represents a predefined portion of the received optical power, in particular between 0,2 and 3 percent of the received optical power.

4. Mosaic module according to claim 2 or 3 further comprising an optical splitter (134), the optical splitter (134) being adapted to split off a predefined portion of the received optical power as the optical monitoring signal.

5. Mosaic module according to any one of the preceding claims, wherein at least one of the input devices (112) is a tactile command surface, for example a touch surface, and/or wherein the at least one of the display devices (110) is a display screen, wherein, in particular at least one input device (112) and at least one display device (110) are combined in a touch screen.

6. Mosaic module according to anyone of the preceding claims, further comprising a controller, in particular a FPGA, adapted to drive the display device (110) in dependence of data received via the optical data input (102), and/or adapted to sense at least one input command received via the input device (112) and to send a signal via the optical data output (104) in dependence of the at least one sensed input command.

7. Mosaic module according to any one of the preceding claims, wherein the mosaic module (100) comprises at least one conversion device (130), in particular a photo-electric device, for transforming at least a fraction of the received optical power received by the at least one optical power supply input (122) into electrical power for powering the at least one display device (110) and/or the at least one input device (112).

8. Mosaic module according to any one of the preceding claims, wherein the at least one optical data input (102) receives data via one or more third optical links (300), being different to the one or more first optical links (320).

9. Mosaic module according to any one of the preceding claims, comprising:
at least one first submodule (A) including the display device (110), the input device (112), the at least one optical data input (102), and/or the at least one optical data output (104), and a second submodule (B), comprising the at least one optical power supply input (122), the at least one optical power supply monitoring output (124), the optical splitter (134) and/or the conversion device (130), wherein the at least one first submodule (A) is respectively provided in a first housing (138) and the second submodule (B) is provided in a second housing (140) being different from the at least one first housing, wherein the first housing and the second housing are adapted to be fixed respectively to the mechanical support structure (400, 600).

10. Mosaic module according to any one of the preceding claims, wherein the mechanical support structure (400, 600) provides a basic grid structure for the mosaic modules (100), each grid element (502) being rectangular shaped, in particular square shaped, and having a grid element length (GL) and a grid element width (GW), wherein mosaic module comprises a display surface (503) including the display device (110), the display surface having a length and a width corresponding respectively to the grid element length (GL) or a multiple of the grid element length and a grid element width (GW) or a multiple of the grid element width, wherein in particular the grid element (502) width and/or the grid element length (GL) is between 15 and 50mm, in particular between 20 and 40mm.

11. Control panel for a power plant comprising
- a mechanical support structure (400, 600), and
- a plurality of mosaic modules (100, 501) placed adjacent to each other, wherein the at least one of these mosaic modules is provided according any one of the preceding claims.

12. Control panel according to claim 11, wherein the mechanical support structure (400, 600) comprises for each mosaic module (100, 501) a frame structure (401, 601), the frame structure is adapted to the outer shape of the display surface (503) of the respective mosaic module (100, 501).

13. Control panel according to claim 12, wherein each frame structure (401) is formed by a plurality of junction elements (404) provided at least the corners of the frame structure, and a plurality of elongated interconnection elements (402) being provide between the junction elements (404) along the width or the length of the mosaic module (100, 501).

14. System comprising:
a control panel according to any one of the claims 11 to 13,
a power generating unit (220) for generating an optical power output, in particular via a laser power source, and
the first optical link (320) connecting the power generating unit (220) with one of the optical power supply inputs (122) of a mosaic module (100).

15. System according to claims 14, wherein the first, second and third optical links (300, 302, 320, 322) are optical fiber cables.
